# EUROPEAN PATENT APPLICATION

(11) **EP 4 361 227 A1**
(43) Date of publication of application: **01.05.2024**
(21) Application number: 22203589.1
(22) Date of filing: 25.10.2022
(51) Int. Cl.: C09D 163/00, C08G 59/42, C09D 167/00, C08G 63/91

(54) **METHOD FOR PRODUCING A LOW TEMPERATURE CURABLE POWDER COATING COMPOSITION AND LOW TEMPERATURE CURABLE POWDER COATING COMPOSITION OBTAINABLE BY SUCH METHOD**

(71) Applicant: Pulver Kimya San. ve Tic. A.S., 41400 Kocaeli (TR)
(72) Inventor: Acar, Ali Ersin, 34342 Istanbul (TR); Özdemir, Aysenur, 34846 Istanbul (TR); Süsler, Göknil, 34779 Istanbul (TR)
(74) Representative: Müller-Boré & Partner Patentanwälte PartG mbB

(57) **Abstract**

The present invention relates to a method for producing a low temperature curable powder coating composition and such low temperature curable powder coating composition obtainable by such method.

## Description

The present invention relates to a method for producing a low temperature curable powder coating composition, the method particularly comprising the preparation of a poly(ester-anhydride) by reactive extrusion in the absence of acetic anhydride and epoxy compounds in a first separate step, as well as to such low temperature curable powder coating composition obtainable by such method. Apart from a low curing temperature said powder coating compositions are particularly characterized by improved storage stability.

Powder coatings are frequently employed as environmentally friendly coating systems since they do not use any organic solvents. In general, industrial powder coating is performed by applying a thermosetting powder to a substrate at elevated temperatures, the powder containing a heat-curable resin. For metal substrates, the curing temperatures of such powder coatings are usually between 140 °C and 200 °C. Due to the high curing temperature, powder coatings are not suited for heat-sensitive substrates such as wood, MDF (medium-density fiberboard), OSB (oriented strand board), and plastics. As a consequence, there has been an increasing interest in powder coatings with a low curing temperature, i.e., a curing temperature between 120 °C and 140 °C. In addition to a low curing temperature, it is necessary to apply resins which are capable of providing an even film. This is typically achieved by using resins that have low molecular weights and low viscosities. However, this often results in poor storage stability due to agglomeration of powder particles, which causes a deteriorated surface quality after coating. Therefore, such powder coatings having a low curing temperature are commonly stored and shipped at low temperatures (15-20 °C).

A successfully employed low temperature curable powder coating formulation usually comprises an epoxy resin (ER) and a carboxylic acid terminated polyester (PE) component where the two components crosslink through an epoxy/carboxylic acid reaction. At least one of said components has to be multifunctional to achieve crosslinking and a three-dimensional network in the cured coating. Other additives such as catalysts, levelling agents, degassing agents, flow additives, colorants, and fillers may also be included in a typical formulation.

In order to achieve a low agglomeration tendency of the powder particles, the glass transition temperature T_{g} of the carboxylic terminated polyester might be increased. This is typically done by increasing the molecular weight of the polymer.

Polyester manufacturers use anhydrides to synthesize multi-carboxylic acid functional polyesters which are often employed in powder coatings. The branched carboxylated polyesters (Scheme 1, compound 6) are synthesized by addition of multi-functional anhydrides, such as trimellitic anhydride (Scheme 1, compound 2), during the synthesis of the polyesters in the melt, wherein the anhydride reacts with the hydroxyl end groups of the prepolymers to form an extra ester linkage (Scheme 1, compounds 3 to 5) and a carboxylic acid end group which then participates in the polymerization. The described reaction of the exemplary anhydride trimellitic anhydride is reported e.g., in EP 1 980 582 A1 and WO 2016/012252 A1.

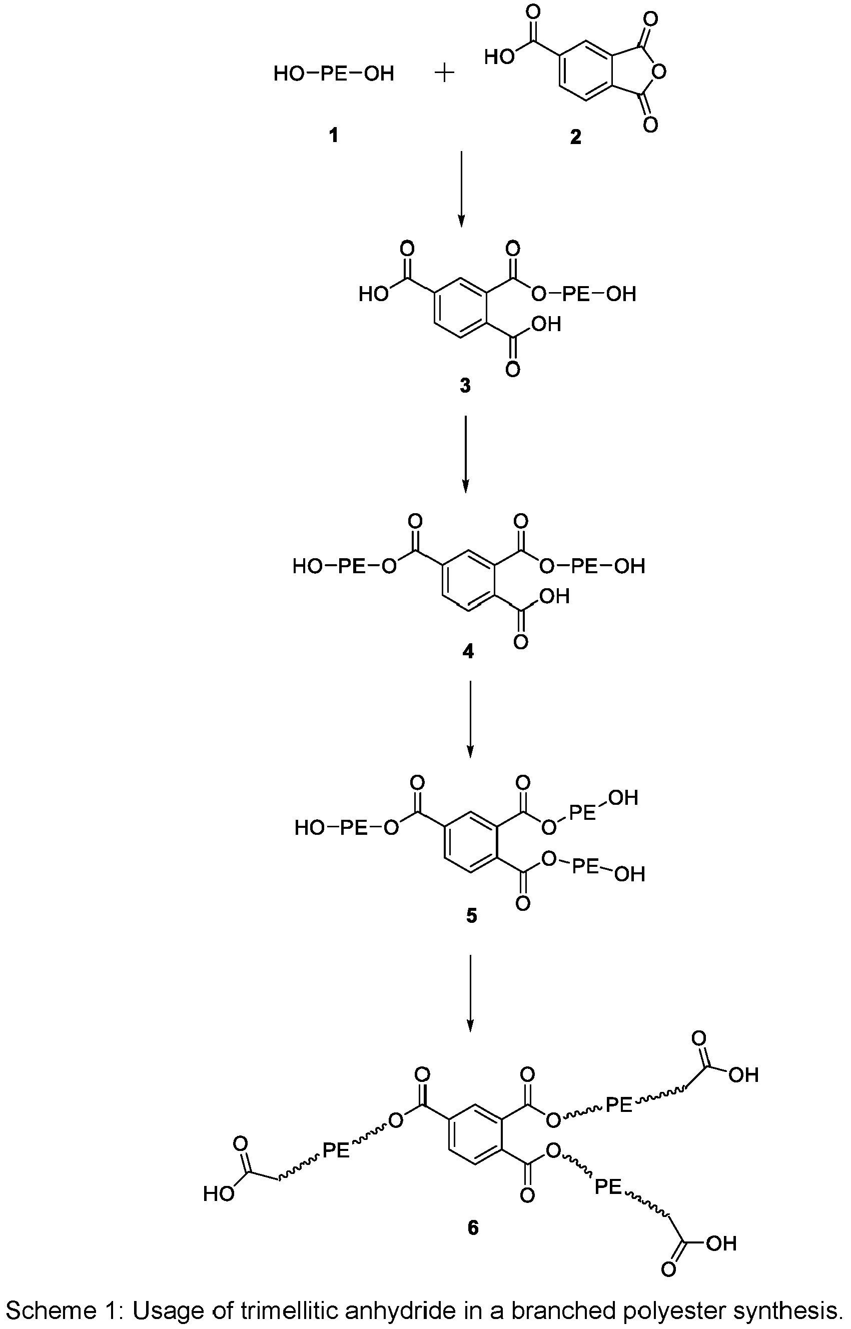

By employing the above approach, the number of reactive chain terminations per chain is increased.

Moreover, anhydrides are also known as epoxy curing agents in both powder and liquid coatings (cf. for example: "The Technology, Formulation, and Application of Powder Coatings", Volume 1, John Wiley and Sons). In said coating systems, the anhydrides do not directly react with the epoxy groups, instead, the cleaved anhydride, after reaction with hydroxyl groups, water, or other nucleophilic compounds such as tertiary amines, is the active species. For example (cf. WO 2020/180979 A1), when the epoxy resin is a bisphenol-A (BPA)-based epoxy resin (Scheme 2, compound 1), the anhydrides react first with the hydroxyl groups of the ER, to form first an ester and a carboxylic acid (Scheme 2, compound 3), followed by a reaction of the latter with the epoxy groups of the ER to form new ester linkages (Scheme 2, compound 5).

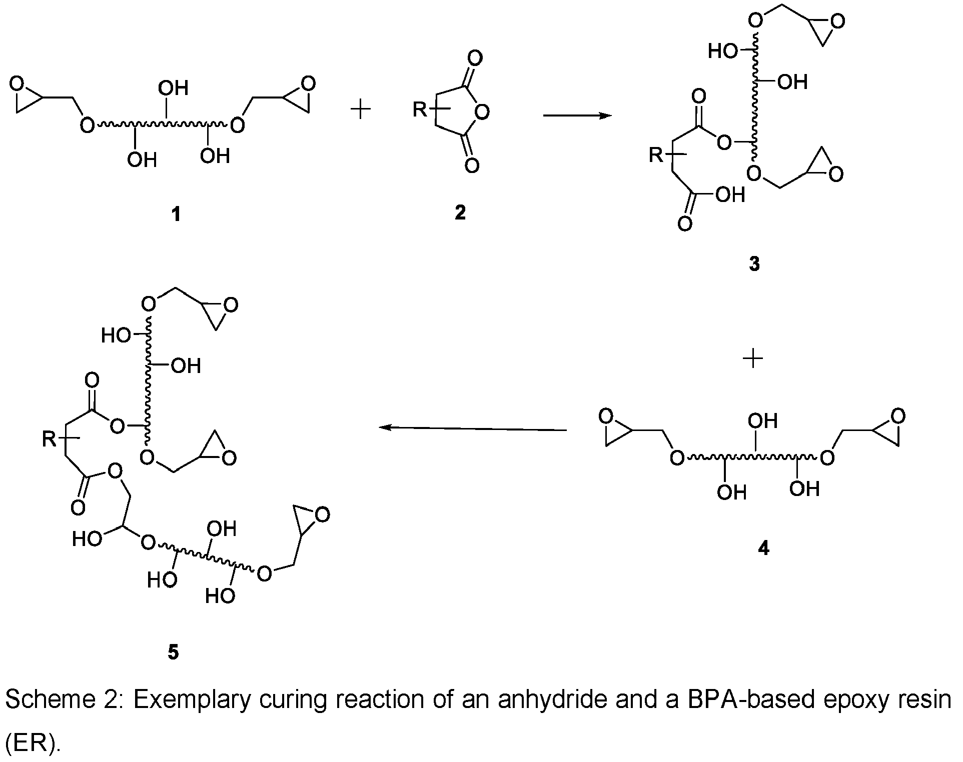

Further, a carboxylic acid may also be generated in the presence of residual water in the coating as in Scheme 3. Even further, a tertiary amine-based reaction generates carboxylate anions that attacks the epoxy groups as shown in Scheme 4.

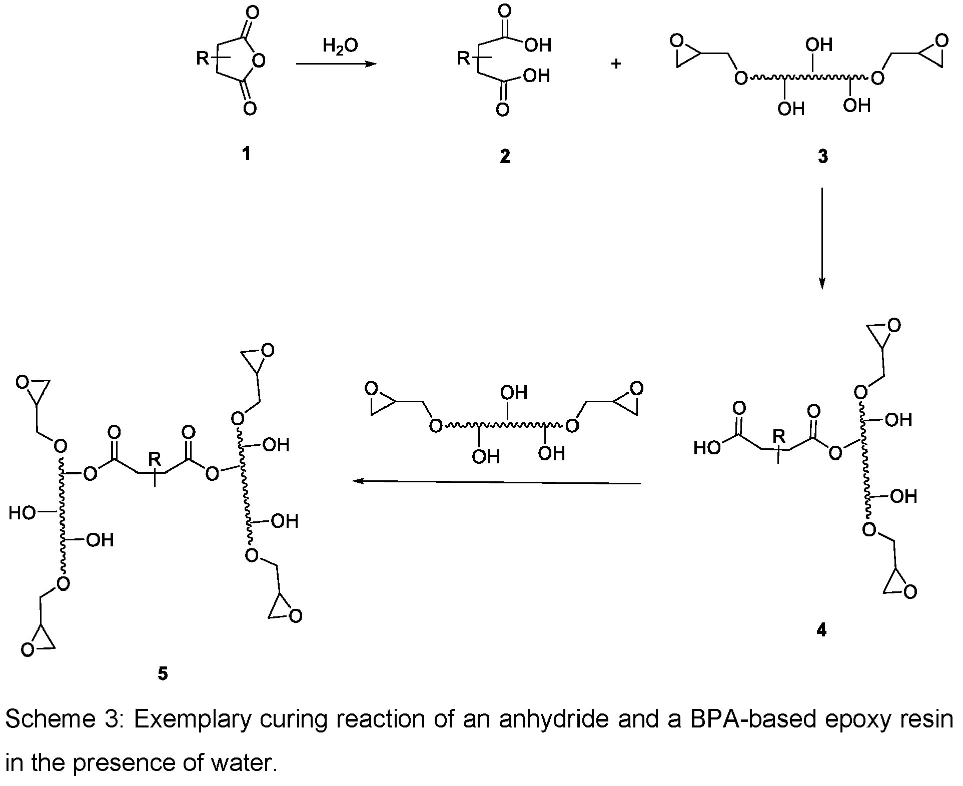

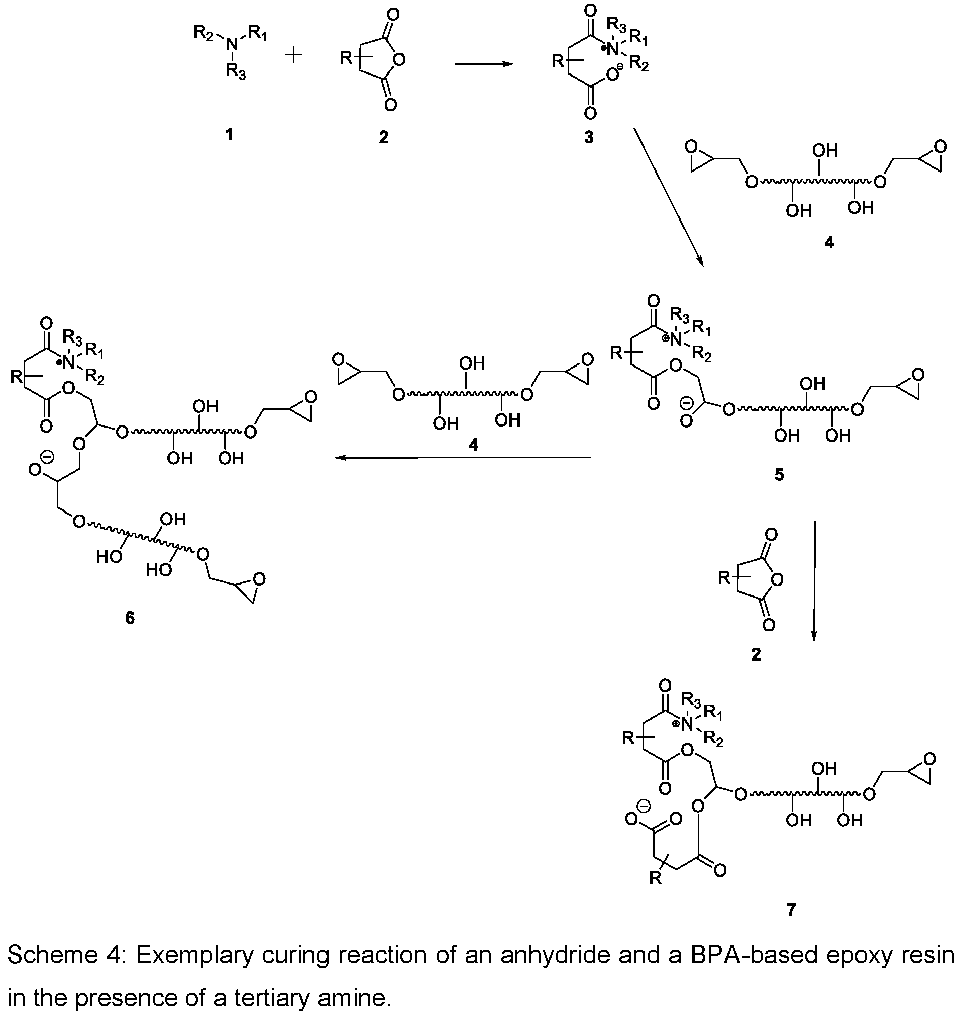

Moreover, anhydrides have been employed in the form of polyanhydrides as well. The term polyanhydride refers to the polyanhydride of dicarboxylic acid monomers such as dodecane dicarboxylic acid or similar compounds, i.e., the polyanhydride contains only carboxylic acid repeat units as shown in Scheme 5. In this context, WO 2018/007373 A1 describes the use of aliphatic polyanhydrides in low temperature curing formulations for powder coating. It can be assumed that said aliphatic polyanhydrides, while reacting with the ER, behave as plasticizers and increase the levelling of the powder coating. Further, in WO 2018/007373 A1, the polyanhydrides are non-reactive to carboxylic acid terminated polyesters.

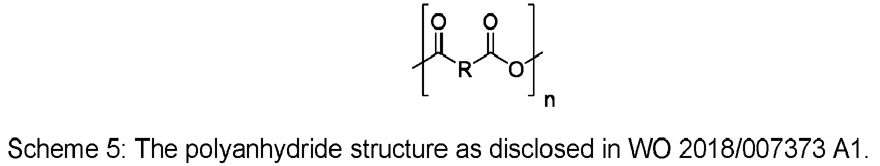

In another approach, as described in E. Dogan, A. E. Acar Prog. Org. Coatings 2013, 76, 513-518, a carboxylic acid terminated polyester is converted to a linear poly(ester-anhydride) by a first, entropy-driven reaction with acetic anhydride and subsequent anhydride/acid exchange at 250 °C under vacuum under emission of acetic acid as an aggressive volatile compound.

However, as explained above, the known methods for producing a powder coating composition have several disadvantages.

Accordingly, in view of the prior art, an object underlying the present invention is to provide a low temperature curable powder coating composition which is exceptionally stable during storage and has excellent appearance properties when being applied to a substrate as well as a method for producing such powder coating composition.

The solution to the above technical problems is provided by the embodiments characterized in the claims.

Accordingly, the present invention relates to a method for producing a low temperature curable powder coating composition, said method comprising the steps of:
1) preparing a poly(ester-anhydride) by reactive extrusion in the absence of acetic anhydride and epoxy compounds in a first separate step, said poly(ester-anhydride) being produced by the reaction of a carboxylic acid terminated polyester and a multi-functional aromatic dianhydride having 2 or more anhydride functionalities so that the resulting poly(ester-anhydride) comprises functional carboxylic acid and anhydride groups;
2) subsequently mixing the poly(ester-anhydride) obtained in step 1) with at least an epoxy resin and a curing catalyst;
3) extruding the mixture obtained in step 2) to obtain a coating composition; and
4) pulverizing and optionally sieving the coating composition to obtain the powder coating composition,
   as well as such low temperature curable powder coating composition obtainable by such method.

The present inventors have conducted extensive research to provide a solution to the above problems and found that the preparation of a poly(ester-anhydride) by reactive extrusion of a multi-functional aromatic anhydride and a carboxylic acid terminated polyester in a first step in the absence of acetic anhydride and epoxy compounds followed by adding an epoxy resin and a curing catalyst, and extruding and pulverizing the resulting mixture provides a low temperature curable powder coating composition having excellent storage stability and appearance properties when being applied to a substrate.

The figures are as follows:
Fig. 1 shows FT-IR spectra of a polyester, pyromellitic dianhydride, a physical mixture of a polyester and pyromellitic dianhydride, and a poly(ester-anhydride).
Fig. 2 shows FT-IR spectra of a polyester, a poly(ester-anhydride), and a poly(ester-anhydride) after cleaving the anhydride bonds.
Fig. 3a shows FT-IR spectra of Example 1 and Reference Example 1 after preparation of the low temperature curable powder coating composition.
Fig. 3b shows FT-IR spectra of Example 1 before and after curing the powder coating composition at 120 °C and 140 °C.

In general, the method for producing a low temperature curable powder coating composition according to the present invention includes 4 steps:
1) preparation of a poly(ester-anhydride) (PEA) by reactive extrusion in the absence of acetic anhydride and epoxy compounds in a first separate step;
2) subsequently mixing of the PEA with at least an epoxy resin (ER) and a curing catalyst;
3) extrusion of the mixture to obtain a coating composition; and
4) pulverizing the coating composition to obtain the powder coating composition.

In the following, steps 1 to 4 are described in detail.

### 1) Preparation of the poly(ester-anhydride)

The PEA according to the present invention includes functional carboxylic acid and anhydride groups, which are both capable of reacting with epoxy groups and, therefore, are excellently suited for crosslinking with epoxy resins at low temperatures. Moreover, the anhydride bonds are formed reversibly of carboxylic acid groups in the first place and can easily be cleaved to yield carboxylic acid functionalities for further reactions. Reversibly bonded anhydrides are stable enough to increase the storage stability while being highly reactive under curing conditions. In particular, PEA is formed by anhydride/acid exchange using a multi-functional aromatic anhydride and a carboxylic acid terminated polyester (PE). The carboxylic acid groups of the polyester are able to cleave the anhydride bonds of the multi-functional aromatic anhydride and to form new noncyclic anhydrides and carboxylic acids. The described reaction is shown exemplarily for the stepwise reaction of pyromellitic dianhydride with several molecules of a carboxylic acid terminated polyester in Scheme 6.

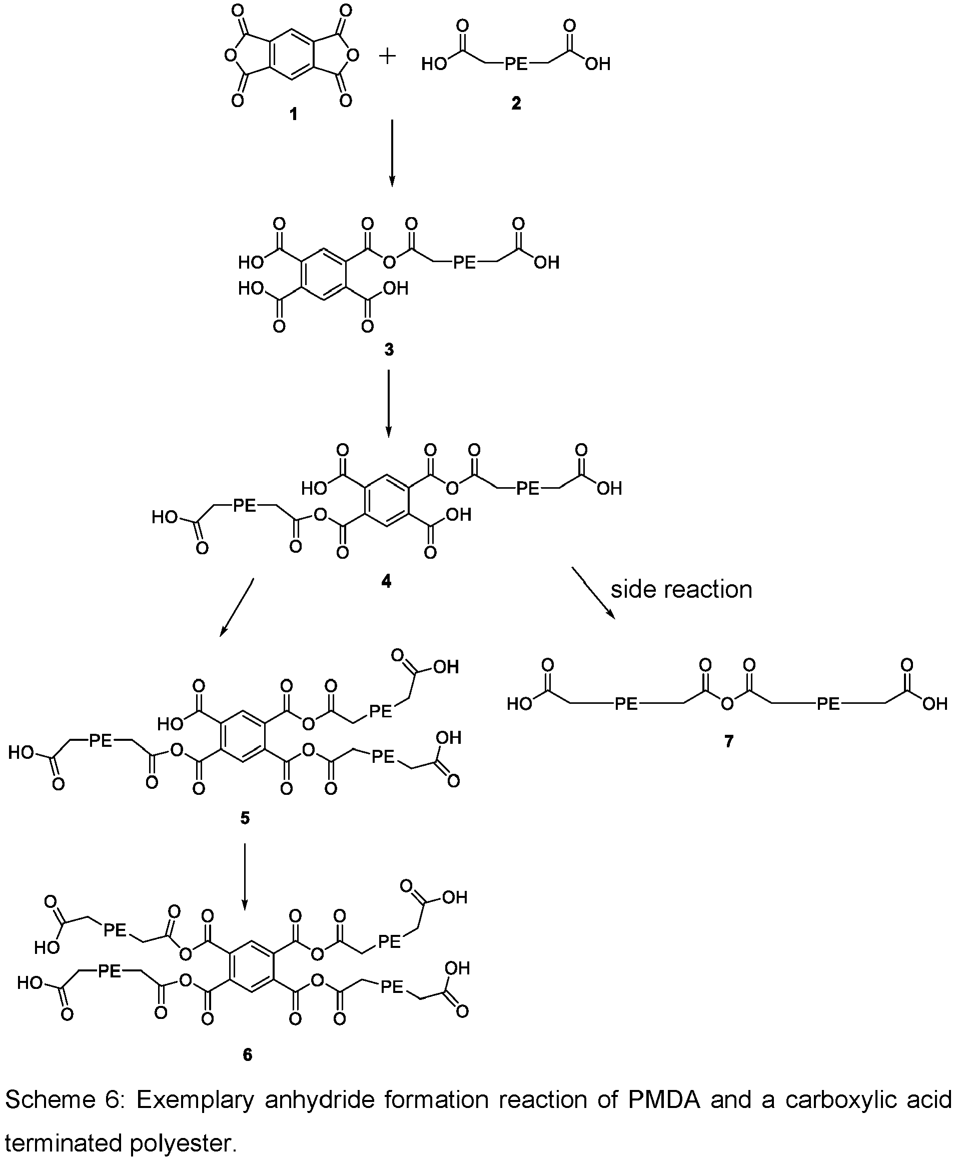

The side reaction shown in the above scheme is known from E. Dogan, A. E. Acar Prog. Org. Coatings 2013, 76, 513-518, wherein this is the desirable reaction. In the method according to the present invention, said side reaction is less likely to occur compared to the binding of the PE to the multi-functional aromatic anhydride but may lead to the formation of residual amounts of a side product.

Since in the preparation of PEA according to the present invention no acetic anhydride is used, cleavage of the anhydride bonds is not connected to emission of aggressive volatile compounds such as acetic acid. In the following, the reactants to form PEA are described in detail.

### Carboxylic acid terminated polyester

The carboxylic acid terminated polyester (PE) according to the present invention might be linear or branched. For a functional crosslinking with epoxy groups, PE preferably includes two or more carboxylic acid functionalities. In addition to the carboxylic acid chain terminations, carboxylic acid groups might be included in side chains of the PE. In particular, the acid functionality of the PE is preferably between 1.5 and 3.5, preferably between 1.5 and 3.0, more preferably between 1.5 and 2.5 and even more preferably between 2.0 and 2.5 (functionality defined as the average number of carboxylic acid groups per molecule).

The carboxylic acid terminated PE is a reaction product of (i) a polyol and (ii) a polycarboxylic acid.

Polyols (i), in particular diols, can be reacted with the carboxylic acids (ii) or their analogues as described below to prepare the polyester. Examples of polyols include aliphatic diols, for example, ethylene glycol, triethylene glycol, 1,2-propanediol, 1,3-propanediol, 2-butyl-2-ethyl-1,3-propanediol, 2-methyl-1,3-propanediol, 1,2-butanediol, 1,4-butanediol, 1,3-butanediol, 2,2-dimethyl-1,3-propanediol (neopentyl glycol), 2,2,4-trimethyl-1,3-pentanediol, 1,2-cyclopentanediol, 1,3-cyclopentanediol, 1,4-cyclopentanediol, 2,5-hexanediol, 1,6-hexanediol, 1,2-cyclohexanediol, 1,3-cyclohexanediol, 1,4-cyclohexanediol, 2,2-bis-(4-hydroxycyclohexyl)-propane (hydrogenated bisphenol-A), 4,4'-methylene-bis(cyclohexanol), 1,4-bis (hydroxymethyl)cyclohexane, 1,3-bis(hydroxyethyl) cyclohexane, 1,3-bis (hydroxypropyl) cyclohexane, 1,3-bis(hydroxyisopropyl) cyclohexane, dodecanediol, xylene glycol, 1,4-dimethylolcyclohexane, hexanetriol, polyethylene- or polypropyleneoxide derived polyols including diethylene glycol and dipropylene glycol, 2,2-bis[4-(2-hydroxyethoxy)-phenyl]propane, the hydroxypivalic ester of neopentylglycol, 4,8-bis-(hydroxymethyl)tricyclo[5,2,1,0]decane (tricyclodecane dimethylol), 2,3-butenediol and combinations thereof.

Examples of polycarboxylic acids (ii) which may be used in the preparation of a polyester include isophthalic acid, terephthalic acid, phthalic acid, hexahydroterephthalic acid, 2,6-naphthalenedicarboxylic acid, 4,4'-oxybisbenzoic acid, 3,6-dichlorophthalic acid, tetrachlorophthalic acid, tetrahydrophthalic acid, hexahydroterephthalic acid, hexachloro endomethylene tetrahydrophthalic acid, endomethylenetetrahydrophthalic acid, phthalic acid, azelaic acid, sebacic acid, decanedicarboxylic acid, adipic acid, succinic acid, sebacic acid, trimesic acid, pyromellitic acid, trimellitic acid, maleic acid, itaconic acid and fumaric acids. These illustrative acids can be used in their acid form or where available, in the form of their anhydrides, acyl chlorides, or lower alkyl esters. Mixtures of acids can also be used. In addition, hydroxycarboxylic acids and lactones can be used. Examples include hydroxypivalic acid and ε-caprolactone. The type of polycarboxylic acid is not particularly limited but might preferably be selected from the group consisting of isophthalic acid, terephthalic acid, phthalic acid, succinic acid, adipic acid, sebacic acid, trimellitic acid, trimesic acid, and a combination thereof.

Trifunctional or more functional polyols or acids can be used to obtain branched polyesters. Examples of suitable polyols and polyacids are glycerol, hexanetriol, trimethylolethane, trimethylolpropane, pentaerythritol, and trimellitic acid.

The type of the polyol is not particularly limited but might preferably be selected from the group consisting of ethylene glycol, 1,2-propanediol, 1,3-propanediol, neopentyl glycol, 1,4-butanediol, 1,6-hexanediol, glycerol, hexanetriol, and a combination thereof. The carboxylic acid terminated polyester might be a commercial product or produced by any known method such as e.g., polycondensation of a polycarboxylic acid and a polyol, polycondensation of a polycarboxylic acid halide and a polyol, transesterification, or ring opening polymerization of lactones. In the preparation of the PEA, a blend of several carboxylic acid terminated polyesters might be used.

### Multi-functional aromatic anhydride

The multi-functional aromatic anhydride comprises two or more anhydride groups. If a monoanhydride is used to prepare the PEA, the PEA has deteriorated properties and quality e.g., in processing. The multi-functional aromatic anhydride is preferably a cyclic multi-functional aromatic anhydride and more preferably pyromellitic dianhydride (PMDA). By using a cyclic multi-functional aromatic anhydride, two PE chains are able to bond to the same molecule, therefore, increasing their molecular weight drastically. By using a multi-functional aromatic anhydride, the stability of the PEA is increased compared to aliphatic anhydrides such as the aliphatic anhydrides prepared in E. Dogan, A. E. Acar Prog. Org. Coatings 2013, 76, 513-518 mentioned above.

Using cyclic multi-functional aromatic anhydrides is further advantageous due to a release of ring tension during the ring opening anhydride/acid exchange reaction. Said effect is connected to a more stable PEA which is necessary, because no volatile side products are eliminated that would drive the formation of the PEA forward. Instead, the reaction relies on stability and reactivity of the starting materials and the PEA, i.e., it is enthalpy-driven. The reaction, thus, is driven by the release of the ring tension, while the multiple anhydride groups bound to an aromatic system serve as inductive groups for each other enhancing the reactivity of the resulting PEA. Even further, the three-dimensional shape of PEA formed of cyclic multi-functional aromatic anhydrides renders them more stable when being compared to linear PEA as disclosed e.g., in E. Dogan, A. E. Acar Prog. Org. Coatings 2013, 76, 513-518, during thermal and mechanical stress which might occur during storage.

### Reactive extrusion of the PEA

To prepare the PEA, the carboxylic acid terminated PE and the multi-functional aromatic anhydride are mixed and extruded in a temperature range of 110 °C to 120 °C. Under these conditions, PEA with excellent properties can be prepared.

The reactive extrusion might be performed in presence of a catalyst catalysing the anhydride/acid exchange and other commonly used additives. The type of catalyst is not particularly limited as long as it is suited for catalysing said reaction. As an exemplary catalyst, 2-methyl imidazole might be mentioned.

In this first step of preparing PEA, it is important that no acetic anhydride is present in the reaction mixture. If acetic anhydride is present, the anhydride/acid exchange might emit acetic acid as an aggressive volatile compound which requires additional precautionary measures.

Moreover, according to the present invention, it is important that in this first step of preparing the PEA no compound having an epoxy group is present in the reaction mixture. In case any epoxy compound is present, said compound might react with each of the multi-functional aromatic anhydride and the carboxylic acid terminated PE. Said reaction would lead to premature curing of the reaction mixture. If the absence of epoxy compounds is ensured, any premature crosslinking reaction of the anhydride and carboxylic acid groups with epoxy groups can be excluded.

### 2) Mixing of the PEA with epoxy resin and curing catalyst

In the second step, the PEA prepared in the first step is mixed with at least an epoxy resin (ER) and a curing catalyst. The mixing may be performed by any kind of suitable mixing method such as using a commercial blender. In the following the components of the mixture besides PEA are described in detail.

### Epoxy resin

The ER is not particularly limited but preferably has 2 or more reactive epoxy groups. If the ER has 2 or more reactive epoxy groups, it can crosslink and form a three-dimensional network when reacting with the PEA. It should be noted that at least one of the ER and the PEA has to be multi-functional in order to achieve a three-dimensional network in the cured powder coating composition.

The ER might be any commercially available epoxy resin such as e.g., bisphenol A epoxy resins, bisphenol F epoxy resins, triglycidyl isocyanurate or glycidylesters. As ER, a blend of several epoxy resins might be used.

### Curing catalyst

The curing catalyst is not particularly limited as long as it catalyses the curing of the epoxy resin with the PEA in the temperature range of approximately 120 °C to 140 °C. The curing catalyst is preferably selected from the group consisting of amines, phosphines, ammonium salts, and phosphonium salts. As exemplary curing catalysts ethyl-triphenyl phosphonium bromide and tetrabutylammonium bromide might be mentioned.

### Other components and additives

The mixture of PEA, ER, and the curing catalyst might include other components and common additives. It might comprise one or more fillers, one or more pigments such as e.g., TiO₂ or carbon black, one or more levelling agents such as e.g., BYK 3900P-polyacrylate, one or more degassing agents such as e.g., CERAFLOUR 964-amide wax, one or more polyolefin waxes such as e.g., WORLEE ADD1200, and other additives commonly used in the field.

### Mixture composition

In the mixing step, all components are preferably mixed in specific ratios to ensure the production of a low temperature curable powder coating composition having excellent quality. The resulting composition comprises preferably 30 to 60 mass% of the ER mixed with 5 to 35 mass% of the PEA and 0.1 to 5 mass% of the curing catalyst. More preferably, 40 to 50 mass% of the ER are mixed with 10 to 20 mass% of the PEA and 0.5 to 2 mass% of the curing catalyst. Even more preferably, 43 to 49 mass% of the ER are mixed with 15 to 19 mass% of the PEA and 0.5 to 1.5 mass% of the curing catalyst.

In amounts relative to 100 parts by mass of the ER, 10 to 75 parts by mass of the PEA and 0.2 to 10 parts by mass of the curing catalyst are preferably added to 100 parts by mass of the ER. More preferably, relative to 100 parts by mass of the ER, 20 to 45 parts by mass of the PEA and 1 to 4 parts by mass of the curing catalyst are mixed to 100 parts by mass of the ER. Even more preferably, relative to 100 parts by mass of the ER, 30 to 40 parts by mass of the PEA and 1 to 3 parts by mass of the curing catalyst are added to 100 parts by mass of the ER.

It should be noted that during curing of the resulting powder coating composition, derivatives of the multi-functional aromatic anhydride are released such as polycarboxylic acids. Said by-products have to be considered when choosing the ratio of ER to PEA, since said by-products are typically also able to crosslink with the ER.

If the components are mixed in the above amounts, a low temperature curable powder coating composition can be produced having excellent storage stability and appearance when being applied to a substrate. In detail, if the above amount of PEA is used, a stable three-dimensional network between the PEA or its PE component and the ER can be provided after curing, ensuring a stable powder coating of the substrate. If less or more than the above amount of PEA is added, the coating may be unstable due to insufficient network formation since either PEA or ER is used in excess. Moreover, if the above amount of curing catalyst is used, the curing time of the coating is excellent for powder coating applications and a stable three-dimensional network can be provided after curing, ensuring a stable powder coating of the substrate. If less than the above amount of curing catalyst is added, the crosslinking density of the coating may be low which results in decreased stability of the coating. If more than the above amount of curing catalyst is added, the curing time of the coating may become too low, and the viscosity of the coating may rise too fast, resulting in decreased stability of the coating.

Other components might be added in suitable amounts commonly employed in preparation of powder coating formulations as long as the quality of the resulting low temperature curable powder coating composition is not decreased and as long as the curing reaction of the PEA and the ER is not negatively affected.

### 3) Extrusion of the mixture

In the third step of producing a low temperature curable powder coating composition, the mixture of components provided in the second step is extruded to form a coating composition. The extrusion is carried out in a temperature range of 100 °C to 110 °C. If the extrusion temperature is above 110 °C, premature curing of the mixture might occur which leads to agglomeration of the mixture and deteriorated processing properties.

### 4) Pulverizing the coating composition

In the fourth step, the coating composition provided in the extrusion step is pulverized and optionally sieved to yield the final low temperature curable powder coating composition. This step may be performed by any suitable method known in the field and may exemplarily be performed by using a suitable commercially available ball mill.

### Low temperature curable powder coating composition

By applying the above method for producing a low temperature curable powder coating composition, a low temperature curable powder coating composition can be provided having excellent storage stability over short and long time periods and excellent appearance when being applied to a substrate.

The present invention is further described in the following with reference to examples which, however, are not limiting the scope of the invention.

### Examples:

### Materials and Methods

All materials used were commercially available materials:
PE1 (Allnex, Crylcoat 1551)
PMDA (Lonza, ≥99,5 wt% by HPLC)
2-Methyl Imidazole (Protex-International, Synthro-ACTIRON 2 MI 20 P, 15-20 % active material)
Epoxy resin (The Dow Chemical Company, D.E.R. 692)
Curing catalyst (Protex-International, Synthro-ACTIRON TAB-P, 65 ± 2% active material)
Wax (WORLÉE CHEMICAL RAW MATERILAS, Worlée ADD 1200)
Flow modifier (BYK Additives & Instruments, BYK-3900 P, 65 wt%)
TiO₂ (TRONOX, Tiona 828, 95%)
Filler (Mineralias Girona SA, Conesa Mineralia, Baristar 8815, %97)
Substrate for determination of gloss: Steel Plate

FT-IR spectroscopy:
For FT-IR spectroscopy, chips, powders, and cured films from steel plates as samples were tested directly without further preparation using the Thermo Fisher Scientific Nicolet 380 FT-IR spectrometer (measurement parameters: 64 - 128 scan number;
evaluation software: Omnic FTIR Software).

All extrusions were carried out in a single-screw extruder. In the reactive extrusion to prepare PEA, extrusion was performed at 230 rpm and 30 kg/h at 120 °C. The extrusion of the mixed components was performed at 230 rpm and 30 kg/h at 100 °C. The above-mentioned temperatures refer to the temperature of the molten polymer in the extruder.

Molecular weight determination:
The molecular weight was determined by gel permeation chromatography (GPC) using a Viscotek VE2001 GPC instrument (measurement parameters: Flow of the eluent THF 0.5 ml/min; evaluation software: OmniSec 4.7). The sample preparation involved dissolving 4 mg of sample/1 ml THF. Moreover, the sample of PEA_AT was dried under vacuum for at least 24 hours.

To prove the presence of anhydride bonds, a anhydride test known in the art was performed (cf. for example US 6,306,507 B1). For this, the sample was subjected to diisobutylamine to cleave all anhydride bonds. Before and after addition of the secondary amine, the molecular weight was determined. In case anhydride bonds were present, the molecular weight of the sample changes depending on the molecular weight of both components linked by the anhydride bond. The anhydride test is also suited to verify that a possible increase in molecular weight is not caused by undesirable polycondensation reactions which would result in irreversible bonding between the components.

Storage stability of the produced powder coating compositions was determined as medium-term and long-term storage stability. In detail, the produced powder coating compositions were stored in an oven at 40 °C for 2 weeks and at ambient temperatures, i.e., room temperature, for 6 months. The appearance of the powder coating compositions was determined before and after storage and the presence of agglomerated particles was evaluated. The results of the storage stability tests are shown in Table 2. The symbols O and X indicate the absence of agglomerated particles (O) and the presence of agglomerated particles/caked powder (X) for each measured Example.

The appearance of a powder coating after being applied to a steel plate substrate was evaluated by determining the gloss using a BYK- Micro Gloss 60° instrument (sample preparation/coating parameters: (140 °C, 10 min), measurement angle: 60°).

### Production Example of a poly(ester-anhydride)

800 g of the carboxylic acid terminated/functional polyester PE1, which has an acid functionality of more than 2, were extruded with 110 g of pyromellitic dianhydride PMDA at 120°C (extrusion at 230 rpm and 30 kg/h) in the presence of 2 g of 2-methyl imidazole as a catalyst to obtain the poly(ester-anhydride) PEA1.

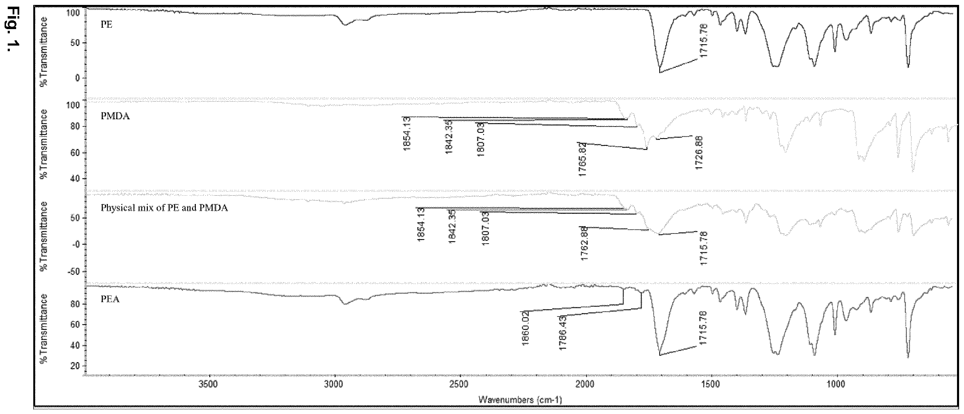

The formation of anhydride bonds was verified by FT-IR spectroscopy. In detail, the wavenumbers of the anhydride vibrational bands of PEA1 were monitored in comparison to PMDA, PE1, and a physical mixture of PE1 and PMDA, i.e., without reacting both components. As can be seen in Fig. 1, the bands of PMDA at 1726 cm⁻¹, 1765 cm⁻¹,1807 cm⁻¹, 1842 cm⁻¹, and 1854 cm⁻¹ disappear in PEA1, which exhibits bands at 1860 cm⁻¹ and 1786 cm⁻¹. The physical mixture of PE1 and PMDA, in contrast, does not show a band shift resulting from formation of new anhydride bonds. The band shift occurring in PEA1 can be assigned to different anhydride bonds which are formed during the reaction.

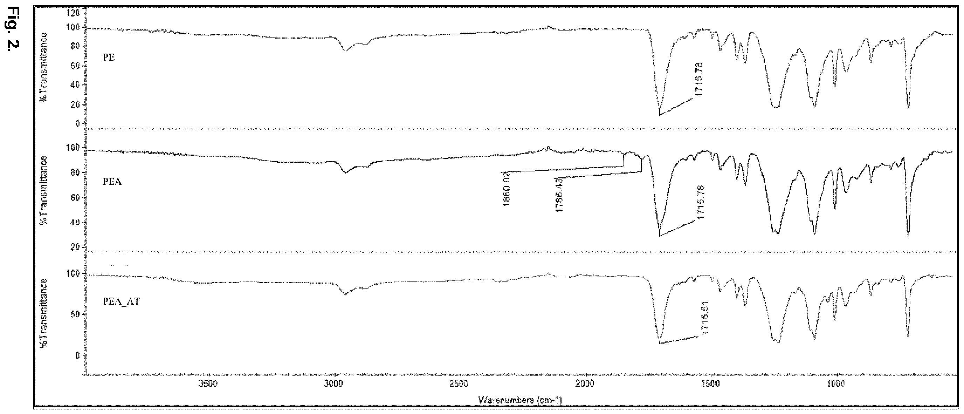

Moreover, the molecular weight of PEA1 was determined in comparison to PE1 and PEA_AT, wherein PEA_AT refers to PEA1 after cleaving the anhydride bonds by a secondary amine as explained above. The results of molecular weight determination are shown in Table 1. The number average molecular weight Mₙ of PEA1 was nearly doubled when compared to PE1 due to formation of anhydride bonds between PE1 and PMDA. The presence of anhydride bonds was further verified by cleaving said bonds, which results in a similar Mₙ as the Mₙ of PE1 before anhydride formation. The same samples were subjected to FT-IR spectroscopy again to verify the absence of anhydride bonds in PEA_AT after performing the anhydride cleaving. The results of FT-IR spectroscopy are shown in Fig. 2. As is evident from said Figure, PEA_AT does not comprise any anhydride bonds, whereas PEA1 exhibits anhydride vibrational bands at 1860 cm⁻¹ and 1786 cm⁻¹.

**Table 1. Molecular weight of PE1, PEA1, and PEA_AT.**

| | Mₙ / g/mol | Mw / g/mol | Mz / g/mol | Mₚ / g/mol | PDI |
|---|---|---|---|---|---|
| PE1 | 4,757 | 8,195 | 13,350 | 8,083 | 1.72 |
| PEA1 | 8,317 | 16,533 | 25,781 | 17,861 | 1.99 |
| PEA_AT | 4,408 | 8,517 | 12,834 | 9,377 | 1.93 |

Two Comparative Production Examples were performed by using monoanhydrides, i.e., succinic anhydride and phthalic anhydride, instead of a multi-functional aromatic anhydride (such as PMDA). In both cases, gases were released during the reactive extrusion and, in the case of succinic anhydride, the resulting extrudate was too liquid to be processed further by extrusion. As can be concluded, by using monoanhydrides instead of multi-functional aromatic anhydrides, the resulting poly(ester-anhydrides) are of decreased quality. The results of these Comparative Production Examples highlight the advantageous effects of using multi-functional aromatic anhydrides.

### Examples

PEA1, epoxy resin, catalyst, wax, flow modifier, TiO₂, and a filler were blended homogeneously in a mixer, extruded at 100 °C (extrusion at 230 rpm and 30 kg/h), and pulverized. Subsequently, the resulting powder coating compositions were applied to substrates. The storage stability of the powder coating compositions at 40 °C for 2 weeks as well as at room temperature for 6 months and the gloss of substrates coated with the respective powder coating composition was determined. The compositions of Examples 1 and 2, Comparative Examples 1 and 2, and Reference Examples 1 and 2, as well as the results of storage stability and gloss determination are shown in Tables 2 and 3 in mass% and relative to 100 parts by mass of the ER.

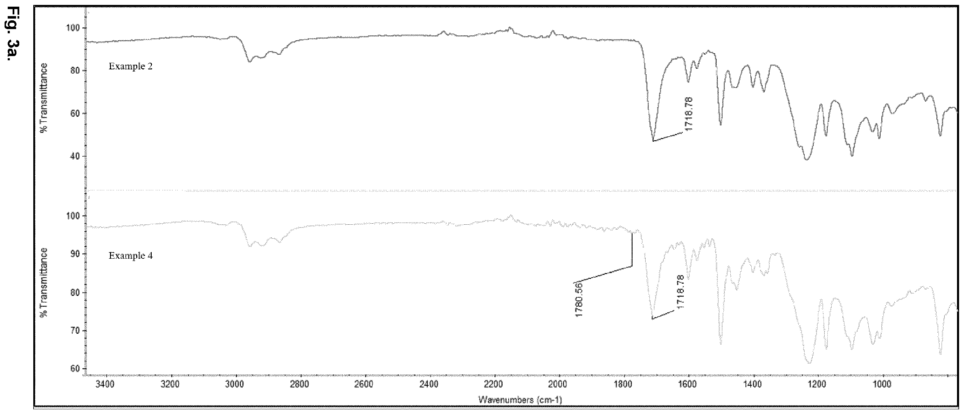

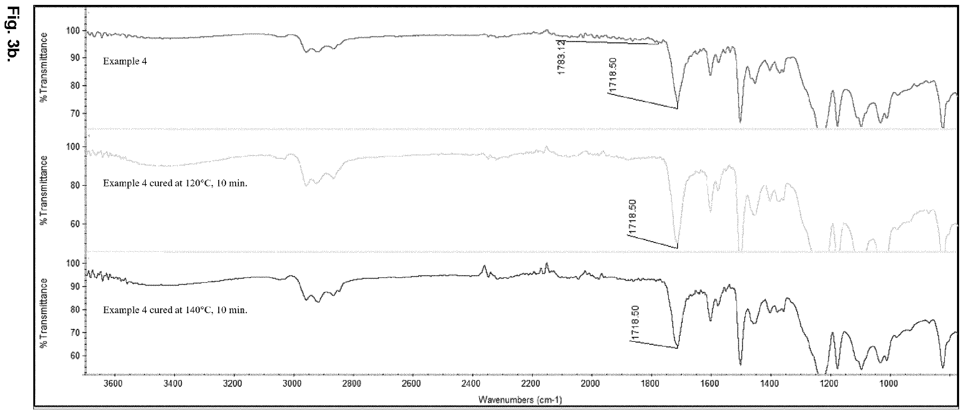

Moreover, Fig. 3a and 3b show the FT-IR spectra of Example 1 and Reference Example 1 after preparation, i.e., after the extrusion (step 3) of the mixed components (Fig. 3a), and the FT-IR spectra of Example 1 before and after curing at 120°C and 140 °C. As can be seen in Fig. 3a, the anhydride bonds (band at 1780 cm⁻¹) are stable over the preparation of Example 1 and do not break during extrusion at 100 °C. However, when Example 1 is subjected to curing at 120 °C or 140 °C, the anhydride vibrational bands (at 1783 cm⁻¹) disappear completely, verifying a successful curing of the powder coating composition at significantly lower temperatures than 160 °C.

**Table 2. Low temperature curable powder coating compositions in mass%.**

| | Ex. 1 | Ex. 2 | Comp. Ex. 1 | Comp. Ex. 2 | Ref. Ex. 1 | Ref. Ex. 2 |
|---|---|---|---|---|---|---|
| Epoxy | 47.4 | 47.4 | 47.4 | 47.4 | 32.5 | 32.5 |
| PE1 | | | 15.5 | 15.5 | 32.5 | 32.5 |
| PEA1 | 17.6 | 17.6 | | | | |
| PMDA | | | 2.1 | 2.1 | | |
| catalyst | 1.3 | 0.9 | 1.3 | 0.9 | 0.9 | 1.4 |
| wax | 1.0 | 1.0 | 1.0 | 1.0 | 1.0 | 1.0 |
| flow modifier | 1.0 | 1.0 | 1.0 | 1.0 | 1.0 | 1.0 |
| TiO₂ | 25.0 | 25.0 | 25.0 | 25.0 | 25.0 | 25.0 |
| filler | 6.7 | 6.7 | 6.7 | 6.7 | 7.2 | 6.7 |
| Gloss | 65 | 62 | 4,5 | 4,5 | 89 | 86 |
| Storage stability @40 °C, 2 weeks | O | O | X | X | X | X |
| Storage stability @RT, 6 months | O | O | X | X | X | X |

**Table 3. Low temperature curable powder coating compositions relative to 100 parts by mass of the ER.**

| | Ex. 1 | Ex. 2 | Comp. Ex. 1 | Comp. Ex. 2 | Ref. Ex. 1 | Ref. Ex. 2 |
|---|---|---|---|---|---|---|
| Epoxy | 100.0 | 100.0 | 100.0 | 100.0 | 100.0 | 100.0 |
| PE1 | | | 32.7 | 32.7 | 100.0 | 100.0 |
| PEA1 | 37.1 | 37.1 | | | | |
| PMDA | | | 4.4 | 4.4 | | |
| catalyst | 2.7 | 1.9 | 2.7 | 1.9 | 2.8 | 4.3 |
| wax | 2.1 | 2.1 | 2.1 | 2.1 | 3.1 | 3.1 |
| flow modifier | 2.1 | 2.1 | 2.1 | 2,1 | 3,1 | 3.1 |
| TiO₂ | 52.7 | 52.7 | 52.7 | 52.7 | 76.9 | 76.9 |
| filler | 14.1 | 14.1 | 14.1 | 14.1 | 22.2 | 20.6 |
| Gloss | 65 | 62 | 4,5 | 4,5 | 89 | 86 |
| Storage stability @40 °C, 2 weeks | O | O | X | X | X | X |
| Storage stability @RT, 6 months | O | O | X | X | X | X |

As is evident from Tables 2 and 3, Examples 1 and 2 exhibit high gloss while being extremely stable during storage both under ambient conditions and at 40 °C. In Comparative Examples 1 and 2, PMDA was added instead of PEA1. Addition of PMDA without performing a reactive extrusion resulted in a strongly decreased gloss value of a coated substrate and reduced storage stability of both powder coating compositions of Comparative Examples 1 and 2. Therefore, the addition of PMDA, which is common in the field of powder coatings, does not cause similar advantages as the addition of PEA1. In Reference Examples 1 and 2, the epoxy resin was reacted directly with the polyester which results in increased gloss. However, in that case, as explained in detail above, the storage stability of the low temperature curable powder coating compositions was deteriorated due to a low T_{g}.

## Claims

1. A method for producing a low temperature curable powder coating composition comprising the steps of:
1) preparing a poly(ester-anhydride) by reactive extrusion in the absence of acetic anhydride and epoxy compounds in a first separate step, said poly(ester-anhydride) being produced by the reaction of a carboxylic acid terminated polyester and a multi-functional aromatic anhydride having 2 or more anhydride functionalities so that the resulting poly(ester-anhydride) comprises functional carboxylic acid and anhydride groups;
2) subsequently mixing the poly(ester-anhydride) obtained in step 1) with at least an epoxy resin and a curing catalyst;
3) extruding the mixture obtained in step 2) to obtain a coating composition; and
4) pulverizing and optionally sieving the coating composition to obtain the powder coating composition.

2. The method according to claim 1, wherein the carboxylic acid terminated polyester is a linear or branched reaction product of (i) a polyol selected from the group consisting of ethylene glycol, triethylene glycol, 1,2-propanediol, 1,3-propanediol, 2-butyl-2-ethyl-1,3-propanediol, 2-methyl-1,3-propanediol, 1,2-butanediol, 1,4-butanediol, 1,3-butanediol, 2,2-dimethyl-1,3-propanediol (neopentyl glycol), 2,2,4-trimethyl-1,3-pentanediol, 1,2-cyclopentanediol, 1,3-cyclopentanediol, 1,4-cyclopentanediol, 2,5-hexanediol, 1,6-hexanediol, 1,2-cyclohexanediol, 1,3-cyclohexanediol, 1,4-cyclohexanediol, 2,2-bis-(4-hydroxycyclohexyl)-propane (hydrogenated bisphenol-A), 4,4'-methylene-bis(cyclohexanol), 1,4-bis (hydroxymethyl)cyclohexane, 1,3-bis(hydroxyethyl) cyclohexane, 1,3-bis (hydroxypropyl) cyclohexane, 1,3-bis(hydroxyisopropyl) cyclohexane, dodecanediol, xylene glycol, 1,4-dimethylolcyclohexane, hexanetriol, polyethylene- or polypropyleneoxide derived polyols including diethylene glycol and dipropylene glycol, 2,2-bis[4-(2-hydroxyethoxy)-phenyl]propane, the hydroxypivalic ester of neopentylglycol, 4,8-bis-(hydroxymethyl)tricyclo[5,2,1,0]decane (tricyclodecane dimethylol), 2,3-butenediol and combinations thereof, and (ii) a polycarboxylic acid selected from the group consisting of isophthalic acid, terephthalic acid, phthalic acid, hexahydroterephthalic acid, 2,6-naphthalenedicarboxylic acid, 4,4'-oxybisbenzoic acid, 3,6-dichlorophthalic acid, tetrachlorophthalic acid, tetrahydrophthalic acid, hexahydroterephthalic acid, hexachloro endomethylene tetrahydrophthalic acid, endomethylenetetrahydrophthalic acid, phthalic acid, azelaic acid, sebacic acid, decanedicarboxylic acid, adipic acid, succinic acid, sebacic acid, trimesic acid, pyromellitic acid, trimellitic acid, maleic acid, itaconic acid and fumaric acids and corresponding forms of their anhydrides, acyl chlorides, or lower alkyl esters, and hydroxycarboxylic acids and lactones including hydroxypivalic acid and ε-caprolactone, and combinations thereof.

3. The method according to claim 1 or 2, wherein the multi-functional aromatic anhydride is pyromellitic dianhydride.

4. The method according to any one of claims 1 to 3, wherein in the reactive extrusion for preparing the poly(ester-anhydride) in step 1) a catalyst is used, particularly 2-methyl imidazole.

5. The method according to any one of claims 1 to 4, wherein the epoxy resin is an epoxy resin having 2 or more reactive epoxy groups.

6. The method according to any one of claims 1 to 5, wherein the epoxy resin is selected from the group consisting of bisphenol A epoxy resins, bisphenol F epoxy resins, triglycidyl isocyanurate and glycidylesters.

7. The method according to any one of claims 1 to 6, wherein the curing catalyst in step 2) is selected from the group consisting of amines, phosphines, ammonium salts, and phosphonium salts, preferably selected from ethyl-triphenyl phosphonium bromide and tetrabutylammonium bromide.

8. The method according to any one of claims 1 to 7, wherein in the mixing step 2) 10 to 75 parts by mass of the poly(ester-anhydride) and 0.2 to 10 parts by mass of the curing catalyst relative to 100 parts by mass of the epoxy resin, and 100 parts by mass of the epoxy resin are mixed.

9. The method according to any one of claims 1 to 8, wherein in the mixing step 2) 30 to 40 parts by mass of the poly(ester-anhydride) and 1 to 3 parts by mass of the curing catalyst relative to 100 parts by mass of the epoxy resin, and 100 parts by mass of the epoxy resin are mixed.

10. The method according to any one of claims 1 to 9, wherein in the mixing step 2) at least one filler and/or at least one pigment and/or at least one levelling agent and/or at least one degassing agent and/or other additives such as a polyolefin wax are added to the mixture.

11. The method according to any one of claims 1 to 10, wherein the reactive extrusion for preparing the poly(ester-anhydride) in step 1) is carried out in a temperature range of 110 °C to 120 °C.

12. The method according to any one of claims 1 to 11, wherein the step of extruding the mixture in step 3) is carried out in a temperature range of 100 °C to 110 °C.

13. A low temperature curable powder coating composition obtainable by the method according to any one of claims 1 to 12.
